# EUROPEAN PATENT SPECIFICATION

(11) **EP 3 694 052 B1**
(45) Date of publication and mention of the grant of the patent: **02.07.2025**
(21) Application number: 19305172.9
(22) Date of filing: 11.02.2019
(51) Int. Cl.: H01R 4/20, H02G 1/14, H01R 4/60, H02G 15/18, H01R 11/09

(54) **DOUBLE-ACTING HIGH TENSION COMPRESSION JOINT**
DOPPELTWIRKENDE HOCHSPANNUNGSKOMPRESSIONSVERBINDUNG
JOINT DE COMPRESSION HAUTE TENSION À DOUBLE ACTION

(43) Date of publication of application: 12.08.2020
(73) Proprietor: Nexans, 92400 Courbevoie (FR)
(72) Inventor: JOHANSEN, Ben Kristian, 1779 HALDEN (NO); GUSTAVSEN, Robin, 1654 SELLEBAKK (NO)
(74) Representative: Onsagers AS

(56) References cited:
- GB-A- 1 443 578
- GB-A- 2 233 166
- GB-A- 688 708

## Description

### Technical Field:

The present invention relates to an assembly of a two-piece conductor joint connecting two high voltage cables conductors and a method for the production of the assembly.

### Background and prior art:

High voltage direct current (HVDC) cables, such as HVDC mass impregnated cables (HVDC-MI cables) are known and often used for long distance electrical transmission.

The conductor inside the cable is often made of copper or aluminium having a circular cross-section centre wire surrounded by concentric layers of stranded, keystone-shaped wires, resulting in a very compact conductor with a smooth surface. The keystone-shaped strands/wires are wound in a spiral, with the layers being wound in alternating directions. The first layer is e.g. wound in a clockwise spiral, the next layer is wound in a counter clockwise spiral and so on. The configuration of a central wire surrounded by such stranded wires provides the cable with improved flexibility.

The conductor of for example a HVDC cable can be surrounded by a plurality of insulating/protective layers. The insulation system usually consists of lapped paper tapes impregnated with a high viscosity compound (hence the term "mass impregnated"). A moisture-proof barrier, a lead alloy sheath, is usually applied above the insulation system. For mechanical and corrosion protection, a polyethylene sheath may be applied. Further, for mechanical strength, transversal reinforcement and steel wire armoring may be applied. To achieve a torsion-balanced design, two layers of armor wires applied in opposite directions are often used, and the armor is corrosion protected by a protective layer. A specific example is a bitumen compound and two layers of polypropylene yarn.

HVDC cables are often used to traverse extremely long distances, for example 50 km. However, the cables are not able to be manufactured and/or transported in one continuous length, therefore the cables must be joined together at a transition joint/joint section.

Several conductor joints are known in the art for connecting the conductors of two high-voltage direct current (HVDC) cables.

US 2004/0194995 A1 (Pasini) discloses a method for joining the interfacing ends of two cables having a plurality of conductor strands. The method involves i) providing each of the cable ends with an enlarged terminal portion/enlarging member/metal inner sleeve of a greater diameter than the cable adjacent the end, ii) inserting the ends into a connecting tube/sleeve having an outer layer of explosive charge, and iii) detonating the explosive layer so as to compress the connecting tube/sleeve around the conductor strands. The terminal portions abut each other within the connecting tube to provide a joint after denotation.

The enlarging member/metal inner sleeve is provided longitudinally within the cable through the terminal portion to effect the enlargement to splay the outer strands of the cable. The resulting increased terminal extremity diameter of the cable relative to the cable adjacent the terminal portions results in the cable having a lager diameter than the rest of the conductor inside the sleeve of the connector/connecting tube. Thus, the conductors are so anchored within the sleeve/connecting tube that it cannot disadvantageously slip or be displaced. However, this known method provides a cable joint having areas of larger diameter than the remaining cable thereby providing a cable joint having an impaired bending property which is not capable to withstand the same tensile forces as the cables themselves without the joint.

US 3,320,659 (Jerome) discloses a method for connecting two cable ends by arranging the cable ends in an abutting or overlapping alignment inside a metal conductor sleeve followed by compressing the sleeve onto the cables by circumferential compression. The cable ends are thereby spliced together with little or no elongation of the cables. The sleeve has a regular smooth barrel shape avoiding corners and sharp edges and may have a roughened inner surface for better gripping the cable ends during compression. The resulting splice has a larger cross-sectional diameter than the conductor's cross-sectional diameter.

A compression connector for electric cable conductors is disclosed in GB 2,233,166. Further conductor joints are disclosed in GB 1,443,578 and GB 688,708.

It is thus an object of the present invention to provide a conductor joint that does not reduce the bending properties of the cables/conductors to be connected.

It is a further object of the invention to provide a conductor joint that can withstand the same tensile forces as the cables/conductors to be connected.

It is a further object of the invention to provide a conductor joint having similar or same cross-sectional diameter as the cross-sectional diameter of the two conductors to be connected.

It is a further object of the invention to provide a conductor joint having a short longitudinal length.

It is a further object of the invention to provide a method for installing a conductor in a time efficient and simple manner.

### Summary of the invention:

The present invention is set forth and characterized in the independent claims, while the dependent claims describe other characteristics of the invention.

The invention provides a conductor joint for connecting conductors of two HVDC cables, for example HVDC-MI cables as disclosed in EP 3416253 A1.

The joint comprises two separate parts; an open-ended outer tubular sleeve and an elongated core element arranged within a sleeve opening, which together join the conductor ends of the two HVDC cables under circular hydraulic pressure. The conductors of the HVDC cables to be joined comprise a circular center wire surrounded by concentric layers of stranded wires, wherein the wires may be keystone-shaped.

Before joining the two HVDC cable conductors, any protective layers and insulating layers are removed from the end portion/terminal portion of each cable, thereby exposing the conductors.

More specifically the invention concerns a conductor joint for connecting a conductor end of a first cable with a conductor end of a second cable. The conductor joint comprises a tubular longitudinal sleeve of a sleeve length Ls having a sleeve opening at each longitudinal end and an elongated element arranged within the sleeve openings, preferably concentrically within the sleeve.

That the joint comprises a combination of a sleeve and an elongated element therein forms a double acting conductor joint which is configured such that, during connection of the conductor ends, compression of the sleeve causes the layers of stranded wires to be squeezed between the outer sleeve and the inner elongated element. Thus, when the external compression is performed directly on the sleeve by for example a hydraulic press, an internal compression of the joint is performed indirectly by the elongated element.

The resulting joint will have the same, or almost the same, outer diameter as the conductors of the first and second cable. Hence the sleeve, the elongated element and the layers of stranded wires are lengthened in the longitudinal direction during compression.

The inner diameter of the sleeve has a size and shape that allows insertion of the conductor ends of the first and second cable.

Further, the sleeve may have an inner surface shaped as two tubular stairs mirrored around a radial cross-sectional area at a longitudinal center of the sleeve.

Each stair may comprise
- a lower step surface at the nearest sleeve opening oriented along a longitudinal axis of the sleeve,
- a higher step surface oriented along the longitudinal axis of the sleeve at or near the longitudinal center and
- a step wall arranged between the lower step surface and the higher step surface oriented along the radial cross-sectional direction of the sleeve.

The elongated element comprises a core rod having a core rod length Lr and a terminal rod wall at each longitudinal end and is preferably arranged longitudinally centered within the sleeve.

The conductor of both the first and the second cable that is to be interconnected may comprise a circular center wire surrounded by a plurality of concentrically layers of stranded wires. With such an arrangement the center wire would be the innermost wire of the conductor.

In an embodiment, the lower and higher step-surfaces of the inner surface of the sleeve form a step-shaped inner surface of the sleeve. After compression, the inner longitudinal step-shaped surface of the sleeve, the longitudinal outer surface of the layers of stranded wires and the outer longitudinal surface of the elongated element is altered into a wave-shape/S-form or partial wave-shape/S-form in the longitudinal direction, thereby forming a locked configuration/locking mechanism/ward between the layers of stranded wires of the conductor ends of the first and second cables and the conductor joint.

The compressed joint has a high mechanical and tensile strength, a strength that preferably corresponds to the mechanical tensile strength of the conductors of the cables. Further, the joint has a bending diameter that corresponds to the bending diameter of the conductor of the cables.

Before connecting the conductor ends of the first and second cable, a longitudinal portion of the circular center wire is removed from the conductor ends, thereby creating a recess surrounded by the layers of stranded wires. During insertion of the conductor ends into the sleeve, the core rod is inserted into the recess of each conductor end.

In a preferred embodiment the core rod comprises a core rod length Lr that is longer than the sleeve length Ls such that the core rod extends outside the sleeves inner surface during connection. As a result, the circular center wire of the conductors is not inserted inside the sleeve and therefore not radially compressed by the outer sleeve during compression. The resulting joint comprises an improved mechanical strength and tensile force.

The outer surface of the sleeve may have an inclination angle at each end towards the central longitudinal axis. The inclination angle may be from 5 to 80° relative to the central longitudinal axis, more preferably from 20 to 50°, e.g. 30°.

The elongated element further comprises
- a core tube concentrically arranged around the core rod, for example longitudinally centered, having a core tube length Lt shorter than the core rod length Lr and wherein the diameter of the core tube is larger than the diameter of the core rod, and
- a core wall/core step wall arranged between the core rod and the core tube oriented along a radial cross-sectional area of the elongated element.

This particular configuration is preferred when the conductor to be connected comprise more than two layers of stranded wires.

In one embodiment where the sleeve comprises a step wall arranged at a lower step surface end, distal to the nearest sleeve opening, each stair may further comprise an intermediate step surface and an intermediate step wall arranged between the step wall and the higher step surface.

Depending on the number of outer layers of stranded wires on the conductors to be connected, more steps can be arranged inside the inner sleeve and/or on the elongated element.

To make a joint that has the same tensile strength and bending diameter as the conductors to be connected the sleeve length Ls should be the same or longer than the diameter of at least one of the conductors of the cables to be connected. For example, the sleeve length may be at least 50 % longer than the diameter of one of the conductor ends to be connected, preferably at least 100% longer, for example 105% longer. Further, it is preferred that the sleeve is not longer than 400% of the diameter of the conductor.

The core rod length Lr may be at least 5% longer than the sleeve length Ls to ensure that the circular center wires of the conductors are not inserted inside the sleeve.

The core rod length may for example be 15% longer than the sleeve length Ls. However, the core rod length Lr is preferably not more than 100% longer than the sleeve length Ls.

The radial distance/thickness of the core wall may be equal or near equal to a radial distance/thickness of a layer of a stranded wire arranged immediately adjacent to a center wire of the conductor ends to be connected.

As already mentioned, a longitudinal portion of the circular center wire of the conductor ends of the first and second cable is removed creating a recess surrounded by the layers of stranded wires before inserting the conductor ends into the sleeve. During insertion of the conductor ends into the sleeve, the core rod is inserted into the recess of each cable end, thus the diameter of the core rod should be smaller or correspond to the diameter the recess/diameter of the circular center wire of the conductors to be connected.

Further, to provide a stronger locking mechanism within the joint after compression, a longitudinal length of the terminal rod wall at at least one longitudinal end may have a larger diameter than the remaining longitudinal length of the core rod, thereby creating a step. The diameter of the terminal rod wall is smaller or equal to the diameter of the recess. Such step may at contribute to a stronger locking mechanism of the joint.

In a preferred embodiment the dimeter of the terminal rod wall is less than 5% larger than the dimeter of the remaining part of the core rod, preferably less than 3% larger, for example 2.6% larger.

The lengths of each step surface along a longitudinal axis of the sleeve may be equal or near equal for each stair.

After compression it is important that the joint has good conductive properties, preferably the same conducting properties as the conductors to be connected. To ensure that the conductive properties are not reduced when compared to the conducting properties of the conductors to be connected, the contacting surface between the radially adjoining surfaces inside the sleeve should have a high degree of friction/abutting surfaces. The radial distance of each step wall of the sleeve may thus equal or near equal to the corresponding radial thickness of a layer of a stranded wire. The radial direction is in this context facing perpendicular to the longitudinal axis of the sleeve. Further, the step surface of each step surface of each stair may have a length along the longitudinal axis of the sleeve which is at least twice the radial thickness/height/distance of the step wall. Further, more than 50% of the outer surface of the elongated element may be threaded and/or more than 50% of the inner surface of the sleeve is threaded for achieving a high degree of friction between the radially adjoining surfaces.

The crossing/corner between a step surface and a step wall can be curved having corners being rounded by an arc of a circle, and wherein the radius of the circle is in the range from 5 mm to 80 mm, preferably between 10 mm and 70 mm, more preferably between 15 mm and 60 mm, for example 25 mm.

The present invention further discloses a method for connecting the conductor end of the first cable with the conductor end of the second cable using a conductor joint.

The conductor ends of the first and second cable comprise
- a circular center wire comprising a terminal wall,
- a plurality of concentrically layers of stranded wires surrounding the circular center wire wherein each layer of stranded wires comprising a terminal wall.

The conductor joint comprises any one of the above-mentioned embodiments which include
- a tubular longitudinal sleeve of a sleeve length Ls having a sleeve opening at each longitudinal end with an inner diameter allowing insertion of the conductor ends to be connected, and
- an elongated element arranged within the sleeve openings, wherein the elongated element comprises
   - a core rod having a core rod length Lr and a terminal rod wall at each longitudinal end.

The method comprises the following steps:
i) inserting the conductor end of the first cable into one sleeve opening such that
   - one of the two terminal rod wall abuts or is adjacent to the terminal wall of the circular central wire of the first cable and
ii) inserting the conductor end of the second cable inside the other sleeve opening such that
   - the other terminal rod wall abuts or is adjacent to the terminal wall of the circular central wire of the second cable,
iii) compressing said sleeve radially towards the elongated element, thereby locking the conductor joint to the conductor ends.

Before inserting the conductor ends of the first and second cable into the sleeve the conductor ends can be prepared using for example a milling tool, drill and/or any other kind of equipment such that a longitudinal part of the center wire is removed creating a recess surrounded by the innermost layer of stranded wires.

Further, if the sleeve is step-shaped, the layers of stranded wires may be prepared into stepped layers so that they may abut or be arranged adjacent to another layer of stranded wires or abut or be arranged adjacent to a corresponding step wall of the sleeve.

During insertion of the cable ends into the sleeve, the core rod of the elongated element is inserted into the recess of the conductor ends of the first and second cable such that the terminal rod wall abuts or is adjacent the terminal wall of the circular center wire.

In the embodiment where the elongated element comprises the core tube arranged around the core rod, the conductor ends can be further prepared for the innermost layer of stranded wires to abut or be adjacent to the core wall.

Further, the terminal wall of a third layer of stranded wires of the conductor end of the first cable may abut or be adjacent to a terminal wall of a third layer of stranded wires of the conductor end of the second cable.

Step iii) may further involve circularly compressing the sleeve until the diameter of a jointed section is the same or similar to the diameter of the conductor ends of the first and second cable.

The first and second cable may have the same configuration and dimensions.

Both the circular center wire and the stranded wires of the conductor can be made of a metal, such as copper or aluminum. The conductor joint parts are preferably made of the same metal as the conducting wires of the cable. The conductors of the two HVDC cables to be connected are preferably having the same or close to the same cross-sectional diameter.

Within the context of the application, the term "conductor" refers to the center wire and the total number stranded wires surrounding the center wire.

The term "conductor end" refers to an end-section of the conductors of the cables which is inserted into the sleeve of the conductor joint before compression, wherein any outer insulating layers and/or protective layers have been removed.

The term "stranded wires" refer to the relative thinner (compared to the central wire) wires wrapped about the central wire. In one embodiment the stranded wires have a key-shaped cross-section.

The term "keystone-shaped" means that the cross-section of each wire/strand has a key shaped form which can be of any form which allows each strand to lock itself to the adjacent strand such that a tight configuration between the strands is achieved. Such key-shaped strands and HVDC cables comprising such key-shaped strands are known in the art.

The term "radial" may not only refer to a direction perpendicular to the axial longitudinal direction but may also refer to a direction having an inclined angle and/or wherein the radial component is more than 50% if not stated otherwise.

The term "wall" refers to a radial wall which can have different radial shapes such as straight, curved or arrow-shaped and is merely used to describe the terminal ends where the components abut or are arranged adjacent to each other before compression. Thus, the term should not be interpreted as a limiting feature. Further, the step wall does not have to be straight but may be uneven having recesses and/or being bulky.

The term "circular hydraulic pressure" refers to a hydraulic press exerting circular pressure onto the sleeve by a circular shaped die, thereby forming a circular shaped conductor joint causing some elongation of the conductor joint and conductors of the first and second cable during compression.

In the following description, numerous specific details are introduced to provide a thorough understanding of embodiments of the claimed joint and method. One skilled in the relevant art, however, will recognize that these embodiments can be practiced without one or more of the specific details.

### Brief description of the drawings:

Fig. 1 is a perspective view of a first or second HVDC-MI cable known from prior art.
Fig. 2A is a cross-sectional view of the conductor in the HVDC-MI cable shown in Fig. 1.
Fig. 2B is a perspective view of the conductor shown in Fig.1 and Fig. 2A.
Fig 3A is an open perspective view of the sleeve of the conductor joint.
Fig. 3B is a perspective view of the sleeve of the conductor joint.
Fig. 4A is a two-dimensional view of the elongated element of the conductor joint.
Fig. 4B is a cross sectional view along A-A of fig. 4A.
Fig. 4C is a perspective view of the elongated element of the conductor joint
Fig. 5 is a close-up view of the connection between the conductor joint and the conductor ends of the first and second cable.
Fig. 6A is a view of the connection between the conductor joint and the conductor ends of the first and second cable shown in fig. 5 before compressing the conductor joint. Fig. 6A also shows a longer part of the first and second cable.
Fig. 6B is a view of the connection between the conductor joint and the conductor ends of the first and second cable shown in fig. 6A after compressing the conductor joint.

In the drawings, like reference numerals have been used to indicate like parts, elements or features unless otherwise explicitly stated or implicitly understood from the context.

### Detailed description of the invention

The invention will now be described with reference to a specific example of joining the conductors ends of two HVDC-MI cables. It should be understood however that the invention is suitable for joining other types for conductors as long as the conductor is of the type having a circular center wire surrounded by stranded wires.

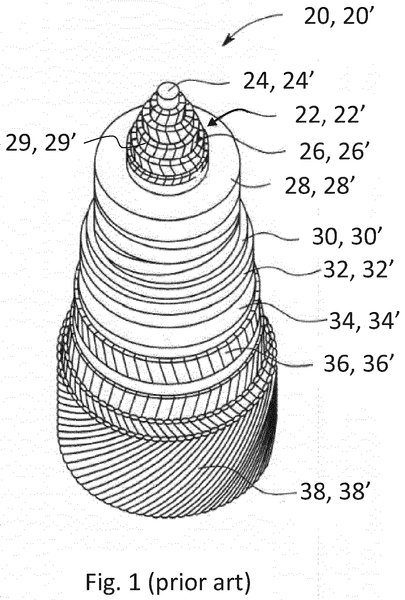

Fig. 1 shows a first and second HVDC-MI cable 20, 20' known from prior art. Each cable 20, 20' comprises a conductor 22, 22' having a circular central wire 24, 24' surrounded by layers 26, 26' of stranded wires 29, 29' providing flexibility of the cables 20, 20'. Surrounding the conductor 22, 22' are a plurality of insulating and/or protective layers. Immediately adjacent conductor 22, 22' is an insulation layer 28, 28' which can be a mass-impregnated paper insulation known in the art, comprising a plurality of wrapped layers of oil-impregnated paper. Outside the insulation layer 28, 28' is a water tight lead barrier/layer 30, 30'. About the lead layer 30, 30' is arranged a polyethylene layer 32, 32'. A strengthening layer 34, 34' of galvanized steel is arranged about the polyethylene layer 32, 32'. An armor layer 36, 36' comprising galvanized steel bands protects the cable from abrasion and other forces. Finally, the cables 20, 20' comprise an outer protective layer 38, 38' bitumen / polypropylene yarn.

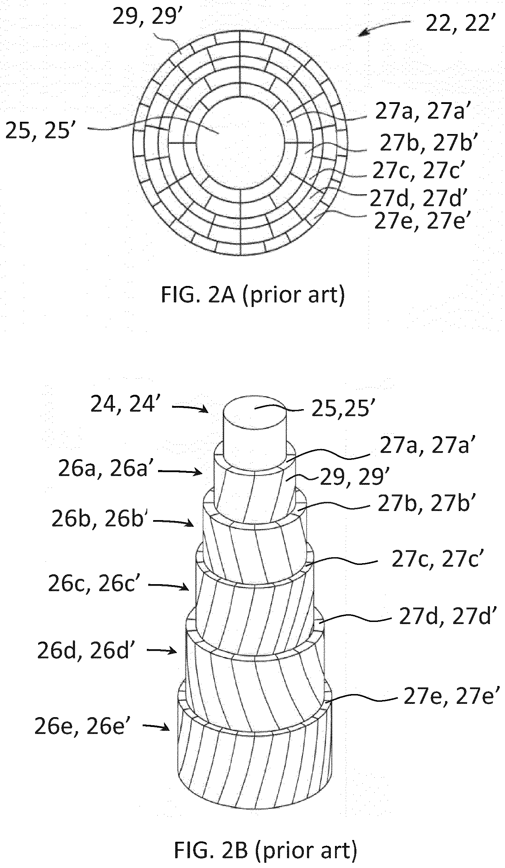

As shown in Fig. 2A and 2B, the central wire 24, 24' is a round/circular wire, and the stranded wires 29, 29' are keystone-shaped to be tightly packed about the central wire 24, 24'. In the examples used herein the first and second cable 20, 20' have five layers 26a-e, 26a'-e' of stranded wires 29, 29'. The stranded wires 29, 29' are wrapped in a spiral about the central wire 24, 24', with alternating layers being wrapped in alternating directions as shown in Fig. 2B. Each layer 26a-e, 26a'-e' of stranded wires 29, 29' has a terminal wall 27a-e, 27a'-e'. Further, the circular center wire 24, 24' has a terminal wall 25, 25'.

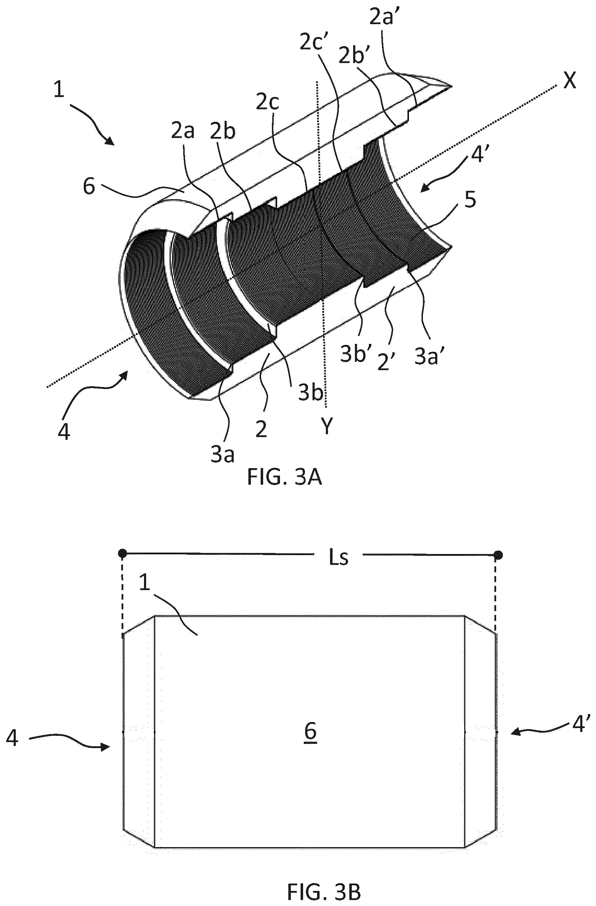

Fig. 3A shows an open view the tubular longitudinal sleeve 1 of the conductor joint showing a part of the inner and outer surface 5, 6 of the sleeve 1. The inner surface 5 of the sleeve 1 is shaped as two tubular stairs, referred to as a first and a second tubular stair 22, 22', which are mirrored around the radial cross-sectional area Y at the longitudinal center of the sleeve 1. The longitudinal center of the sleeve being arranged where the X-axes and Y-axes in fig. 3A meet.

The inner diameter of the sleeve 1 is decreasing towards the longitudinal center of the sleeve 1, being at the largest at the sleeve openings 4, 4'. Each tubular stair 2, 2' has a lower step surface 2a, 2a' arranged nearest the corresponding sleeve opening 4, 4'. As shown, the lower step surface 2a of the first stair 2 is arranged nearest sleeve opening 4, and the lower step surface 2a' of the second stair 2' is arranged nearest sleeve opening 4'. Further, each stair 2, 2' has a higher step surface 2c, 2c' and an intermediate step surface 2b, 2b'. The higher step surface 2c of the first stair 2 is flush with higher step surface 2c' of the second stair 2'. The intermediate step surface 2b of the first stair 2 is arranged between the lower step surface 2a and the higher step surface 2c, while the intermediate step surface 2b' of the second stair is arranged between the lower step surface 2a' and the higher step surface 2c'.

In the first stair 2, arranged between the lower step surface 2a and the intermediate step surface 2b, is a first step wall 3a oriented parallel to the radial cross-sectional direction/radial axis Y of the sleeve 1.

Further, the crossing/corner between the lower step surface 2a and the first step wall 3a is curved and the crossing/corner between the first step wall 3a and the intermediate step surface 2b is curved.

Between the intermediate step surface 2b and the higher step surface 2c, is arranged a second step wall 3b oriented parallel to the radial cross-sectional direction of the sleeve 1.

The crossing/corner between the intermediate step surface 2b and the second step wall 3b is curved and the crossing/corner between the second step wall 3b and the higher step surface 2c is curved.

It is also shown that the step surfaces 2a, 2b, 2c have equal longitudinal lengths arranged parallel to the longitudinal axis X of the sleeve.

Also, the first and second step wall 3a, 3b have the same radial distance/thickness.

Since the first and second stair 2, 2' are mirrored, it is implicit that the second stair 2' has the same, but mirrored configuration and will not be described in further detail.

The outer surface 6 of the sleeve is shown in fig. 3B and is substantially tubular. The outer surface 6 of the sleeve 1 is parallel to the longitudinal axis X of the sleeve 1 and is having an inclination angle at each end towards the central longitudinal axis X of the sleeve. The shown inclination angle is 30°. Further, about 85% of the outer surface 6 of the sleeve 1 is shown being parallel with the longitudinal axis X of the sleeve 1.

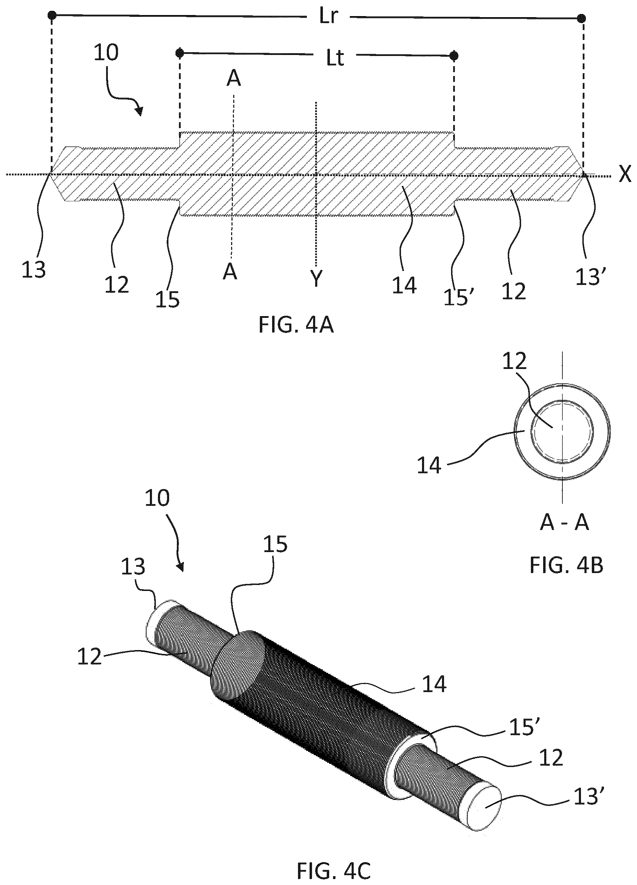

Fig. 4A and 4C illustrate the elongated element 10 of the conductor joint having a core tube 14 arranged around the core rod 12. The core tube 14 and the core rod 12 are concentric and the core tube 14 is longitudinally centered to the core rod 12.

A first and second core wall 15, 15' is arranged at each longitudinal end of the core tube 14 between the core rod 12 and the core tube 14. Each core wall 15, 15' is oriented parallel to the radial cross-section direction of the elongated element 10.

The core walls 15, 15' create a step from the outer surface of the core rod 12 to the outer surface of the core tube 14.

The crossing/corner between the outer surface of the core rod 12 and the first and/or second core wall 15, 15' is curved and the crossing/corner between the outer surface of the core tube 14 and the first and/or second core wall 15, 15' is curved.

Further the illustration of the elongated element shows that the outer surface of the core rod 12 and core tube 14 are threaded.

It is also shown that the core element 12 has a first terminal wall 13 the one longitudinal end, and a second terminal wall 13' at the other terminal end.

In Fig. 4A the terminal walls 13, 13' have an arrow shape and a longitudinal part having a larger diameter than the remaining longitudinal length of the core rod 12 creating a step near the longitudinal ends of the core rod 12.

In Fig. 4C a longitudinal length of the terminal walls 13, 13' also have a larger diameter than the remaining longitudinal length of the core rod 12 thereby creating a step near the longitudinal ends of the core rod 12. Such step may contribute to a stronger locking mechanism of the joint. Further, the terminal walls 13, 13' are radially oriented.

Fig. 4B shows a cross sectional view along A-A in fig. 4A which illustrate that the diameter of the core tube 14 is greater than the diameter of the core rod 12.

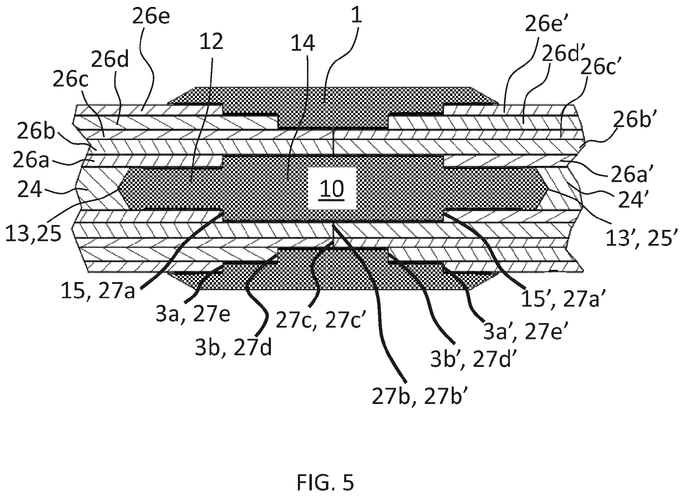

Fig 5 shows the connection between the conductor joint and the conductor ends of the first and second cable after inserting the conductor ends into the sleeve 1.

The inner surface of the sleeve 1 of the conductor joint has the same configuration as shown in Fig. 3A and the elongated element 10 has the same configuration as shown in Fig. 4A.

The first cable comprises the circular center wire 24 being the innermost wire of the cable. The center wire 24 has a terminal wall 25 which is shown to have a corresponding shape to the arrow-shaped first terminal wall 13 of the core rod 12 of the elongated element 10 and the radial face of the terminal wall 25 of the center wire 24 is abutting the radial phase of the first terminal wall 13 of the core rod 12.

A first layer 26a of stranded wires of the first cable is immediately surrounding the circular center wire 24. The first layer 26a of stranded wires is therefore the innermost layer of stranded wires. The first layer 26a of stranded wires has a terminal wall 27a which abuts the first core wall 15 of the elongated element 10.

The second cable comprises the circular center wire 24' being the innermost wire of the second cable. The center wire 24' has a terminal wall 25' which is shown to have a corresponding shape to the arrow-shaped second terminal wall 13' of the core rod 12 of the elongated element 10 and the radial face of the terminal wall 25' of the center wire 24' is abutting the radial phase of the second terminal wall 13' of the core rod 12.

A first layer 26a' of stranded wires of the second cable is immediately surrounding the circular center wire 24'. The first layer 26a' of stranded wires is therefore the innermost layer of stranded wires. The first layer 26a' of stranded wires has a terminal wall 27a' which abuts the second core wall 15' of the elongated element 10.

A second layer 26b of stranded wires of the first cable is immediately surrounding the first layer 26a of stranded wires, and a second layer 26b' of stranded wires of the second cable is immediately surrounding the first layer 26a' of stranded wires. The second layer 26b has a terminal wall 27b which abuts a terminal wall 27b' of the second layer 26b' of stranded wires of the second cable.

A third layer 26c of stranded wires of the first cable is immediately surrounding the second layer 26b of stranded wires, and a third layer 26c' of stranded wires of the second cable is immediately surrounding the second layer 26b' of stranded wires. The third layer 26c has a terminal wall 27c which abuts a terminal wall 27c' of the third layer 26c' of stranded wires of the second cable.

A fourth layer 26d of stranded wires of the first cable is immediately surrounding the third layer 26c of stranded wires. The fourth layer 26d is further having a terminal wall 27d abutting the second step wall 3b of first stair of the sleeve 1.

A fourth layer 26d' of stranded wires of the second cable is immediately surrounding the third layer 26c' of stranded wires. The fourth layer 26d' is further having a terminal wall 27d' abutting the second step wall 3b' of second stair of the sleeve 1.

A fifth layer 26e of stranded wires of the first cable is immediately surrounding the fourth layer 26d of stranded wires. The fifth layer 26e, which is the outermost layer of stranded wires of the first cable, is further having a terminal wall 27e abutting the first step wall 3a of the first stair of the sleeve 1.

A fifth layer 26e' of stranded wires of the second cable is immediately surrounding the fourth layer 26d' of stranded wires. The fifth layer 26e', which is the outermost layer of stranded wires of the second cable, is further having a terminal wall 27e' abutting the first step wall 3a' of the second stair of the sleeve 1.

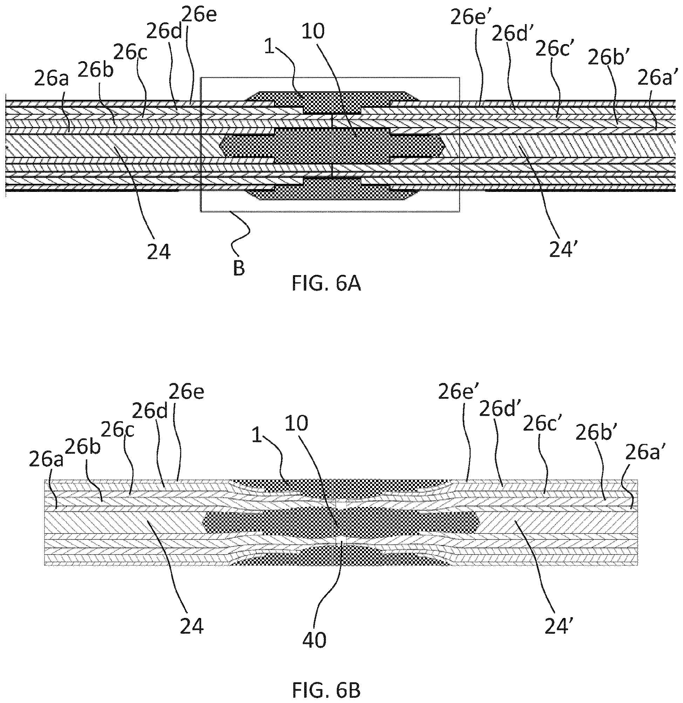

Fig. 6A and 6B show the connection between the conductor joint and the conductor ends of the first and second cable shown in fig. 5 before and after compressing the conductor joint respectively. The rectangular box B in Fig. 6A is shown in Fig. 5 and the connection between the conductor joint and the conductor ends of the first and second cable is therefore having the same configuration as shown in Fig. 5.

The compression of the sleeve 1 causes the layers of stranded wires to be squeezed between the outer sleeve 1 and the inner elongated element 10. This external compression is performed directly on the sleeve by for example a hydraulic press of 200 tons (200 000 kg) or more. An internal compression of the joint is performed indirectly by the elongated element.

The resulting joint shown in Fig. 6B same outer diameter as the conductors of the first and second cable. The elongated element 10 and the layers of stranded wires 26a-e, 26a'-e' have been lengthened in the longitudinal direction during compression.

After compression, as shown in Fig. 6B, the inner longitudinal step-shaped surface of the sleeve 1, the longitudinal outer surface of the layers 26a-e, 26a'-e' of stranded wires and the outer longitudinal surface of the elongated element 10 is altered into a wave-shape/S-form in the longitudinal direction and a locked configuration/locking mechanism/ward between the layers 26a-e, 26a'-e' of stranded wires of the conductor ends of the first and second cables and the conductor joint is formed.

As can be seen from fig. 6B air pockets 40 are formed between the terminal wall of the second layer 26b of stranded wires of the first cable which before compression was abutting the terminal wall of the second layer 26b' of stranded wires of the second cable. Air pockets are also formed between the terminal wall of third layer 26c of stranded wires of the first cable which before compression was abutting the terminal wall of the third layer 26c' of stranded wires of the second cable. Thus, the electric current passing through the conductor joint after connection is also moved in an alternating direction having a wave-shape/S-form in the longitudinal direction thereby avoiding being terminated by the air pockets 40. A threaded outer surface of the elongated element and a threaded inner surface of the sleeve is therefore advantageous for achieving a high degree of friction between the radially adjoining surfaces allowing the electric current to pass therethrough.

### Example of dimensions:

This example relates to the connection of the conductor ends of two HVDC cables comprising conductors having a center wire and five layers of stranded wires as shown in Fig. 5. The conductors of the two cables have an outer diameter of 47.3 mm and has a bending diameter of 6 m.

The largest outer diameter of the sleeve is 56 mm the longitudinal length of the sleeve, sleeve length, Ls is 90 cm. The inclination angle at each longitudinal end towards the central longitudinal axis X of the outer surface of the sleeve is 30°.

The inner diameter of the sleeve at each longitudinal end is about 47.3 mm. The inner diameter at the radial cross section of the sleeve at the lower step of the sleeve is also about 47.3 mm. The inner diameter at the radial cross section of the sleeve at the intermediate step is about 41.5 mm, while the inner diameter at the radial cross section of the sleeve at the higher step is about 33.7 mm. The longitudinal length of each step surface is about 15 mm.

The elongated element has a core rod length Lr of 117 mm, wherein the arrow shaped terminal wall at each longitudinal end of the elongated element has a longitudinal length of 3.5 mm. The tube length Lt is 60 mm. The length of the core rod at the terminal rod wall having a larger diameter than the remaining longitudinal length of the core rod is 3mm and is having a diameter of 11.8 mm, while the remaining part of the core rod has a diameter of 11.5 mm. The diameter of the core tube is 18.4 mm.

In the preceding description, various aspects of the conductor joint according to the invention have been described with reference to the illustrative embodiment. For purposes of explanation, specific numbers, systems and configurations were set forth in order to provide a thorough understanding of the joint and its workings. However, this description is not intended to be construed in a limiting sense. Various modifications and variations of the illustrative embodiment, as well as other embodiments of the conductor joint, which are apparent to persons skilled in the art to which the disclosed subject matter pertains, are deemed to lie within the scope of the present invention.

**List of reference numerals / letters:**

| | |
|---|---|
| 1 | Sleeve |
| 2 | first stair |
| 2' | second stair |
| 2a | Lower step surface of first stair |
| 2a' | Lower step surface of second stair |
| 2b | Intermediate step surface of first stair |
| 2b' | Intermediate step surface of second stair |
| 2c | Higher step surface of first stair |
| 2c' | Higher step surface of second stair |
| 3a | First step wall of first stair |
| 3a' | First step wall of second stair |
| 3b | Second step wall of first stair |
| 3b' | Second step wall of second stair |
| 4 | First sleeve opening |
| 4' | Second sleeve opening |
| 5 | Inner surface of the sleeve |
| 6 | Outer surface of the sleeve |
| 10 | Elongated element |
| 12 | Core rod |
| 13 | First terminal rod wall |
| 13' | Second terminal rod wall |
| 14 | Core tube |
| 15 | First core wall |
| 15' | Second core wall |
| 20 | First cable |
| 20' | Second cable |
| 22 | Conductor end of first cable |
| 22' | Conductor end of second cable |
| 24 | Circular center wire of first cable |
| 24' | Circular center wire of second cable |
| 25 | Terminal wall of center wire of first cable |
| 25' | Terminal wall of center wire of second cable |
| 26 | Layer of stranded wires |
| 26' | Layer of stranded wires |
| 26a | First layer of stranded wires of first cable |
| 26a' | First layer of stranded wires of second cable |
| 26b | Second layer of stranded wires of first cable |
| 26b' | Second layer of stranded wires of second cable |
| 26c | Third layer of stranded wires of first cable |
| 26c' | Third layer of stranded wires of second cable |
| 26d | Fourth layer of stranded wires of first cable |
| 26d' | Fourth layer of stranded wires of second cable |
| 26e | Fifth layer of stranded wires of first cable |
| 26e' | Fifth layer of stranded wires of second cable |
| 27a | Terminal wall of first layer of stranded wires of first cable |
| 27a' | Terminal wall of first layer of stranded wires of second cable |
| 27b | Terminal wall of second layer of stranded wires of first cable |
| 27b' | Terminal wall of second layer of stranded wires of second cable |
| 27c | Terminal wall of third layer of stranded wires of first cable |
| 27c' | Terminal wall of third layer layer of stranded wires of second cable |
| 27d | Terminal wall of fourth layer of stranded wires of first cable |
| 27d' | Terminal wall of fourth layer of stranded wires of second cable |
| 27e | Terminal wall of fifth layer of stranded wires of first cable |
| 27e' | Terminal wall of fifth layer of stranded wires of second cable |
| 29 | Stranded wire of first cable |
| 29' | Stranded wire of second cable |
| 30 | Lead barrier layer of first cable |
| 30' | Lead barrier layer of second cable |
| 32 | Polyethylene layer of first cable |
| 32' | Polyethylene layer of second cable |
| 34 | Strengthening layer of first cable |
| 34' | Strengthening layer of second cable |
| 36 | Armor layer of first cable |
| 36' | Armor layer of second cable |
| 38 | Outer protective layer of first cable |
| 38' | Outer protective layer of second cable |
| 40 | Air pocket |
| X | Longitudinal axis of the sleeve |
| Y | Radial axes of the sleeve |

## Claims

1. Assembly comprising a first cable, a second cable, and a conductor joint connecting a conductor end (22) of the first cable (20) with a conductor end (22') of the second cable (20'), wherein the conductor joint comprises
- a tubular longitudinal sleeve (1) of a sleeve length Ls having a sleeve opening (4, 4') at each longitudinal end with an inner diameter allowing insertion of the conductor ends (22, 22') to be connected, and
- an elongated element (10) arranged within the sleeve openings (4, 4'), wherein the elongated element (10) comprises a core rod (12) having a core rod length Lr and a terminal rod wall (13, 13') at each longitudinal end, wherein the elongated element (10) further comprises
• a core tube (14) concentrically arranged around the core rod (12) having a core tube length Lt shorter than the core rod length Lr and wherein the diameter of the core tube (14) is larger than the diameter of the core rod (12), and
• a core wall (15, 15') arranged between the core rod (12) and the core tube (14) oriented along a radial orientation of the elongated element (10)
**characterized in that** the conductor ends of the first and second cable comprise
- a circular center wire (24, 24') comprising a terminal wall (25, 25'),
- a plurality of concentrical layers (26a-26e, 26a'-26e') of stranded wires (29, 29') surrounding the circular center wire (24,24') wherein each layer (26a-e, 26a'-26e') of stranded wires (29,29') comprises a terminal wall (27a-e, 27a'-27e'),
such that a recess is created by a removal of a longitudinal portion of the circular center wire (24,24') from the conductor ends and by the surrounding layers of stranded wires (29,29'), such that each longitudinal end of the core rod (12) is inserted into said recess.

2. Assembly according to claim 1, wherein the core rod length Lr is longer than the sleeve length Ls.

3. Assembly according to claim 1 or 2, wherein the elongate element (10) is arranged concentrically within the sleeve (1).

4. Assembly according to any one of the preceding claims, wherein the sleeve (1) comprises an inner surface shaped as two tubular stairs (2, 2') mirrored around a radial cross-sectional area at a longitudinal center of the sleeve (1), wherein each stair (2, 2') comprises,
• a lower step surface (2a, 2a') at the nearest sleeve opening (4, 4') oriented along a longitudinal axis (X) of the sleeve (1),
• a higher step surface (2c, 2c') at the longitudinal center and
• a step wall (3a,3b, 3a', 3b') arranged between the lower step surface (2a, 2a') and the higher step surface (2c, 2c') oriented along a radial cross-sectional direction of the sleeve (1).

5. Assembly according to claim 1, wherein the radial distance of the core wall (15,15') is equal to a radial thickness of a first layer (26a, 26a') of a stranded wire (29, 29') immediately adjacent to a center wire (24, 24') of the conductor ends (22, 22') to be connected.

6. Assembly according to claim 4, wherein the step wall (3a,3a') is at the lower step surface (2a,2a') end, distal to the nearest sleeve opening (4,4'), and wherein each stair (2, 2') further comprises an intermediate step surface (2b, 2b') and an intermediate step wall (3b,3b') arranged between the step wall (3a,3a') and the higher step surface (2c,2c').

7. Assembly according to any one of the preceding claims, wherein the sleeve length Ls is equal to or longer than the diameter of at least one of conductors ends (22, 22').

8. Assembly according to any one of the preceding claims, wherein the diameter of the core rod (12) is equal or smaller than the diameter of a center wire (24, 24') of each of the conductor ends (22, 22').

9. Assembly according to any one of claims 4 or 6, wherein for each stair (2, 2'), the lengths of each step surface (2a-2c,2a'-2c') along a longitudinal axis of the sleeve (1) are equal.

10. Assembly according to any one of claims 4, 6 or 9, wherein the radial distance of the first step wall (3a, 3a') of the sleeve (1) is equal to the radial thickness of an outermost layer (26e, 26e') of stranded wires (29, 29').

11. Assembly according to any one of the preceding claims, wherein a longitudinal length of the terminal rod wall (13,13') at at least one longitudinal end of the core rod (12) has a larger diameter than the remaining longitudinal length of the core rod (12).

12. Assembly according to any one of claims 4, 6, 9 or 10 wherein, for each stair, each step surface (2a, 2b, 2c, 2a', 2b', 2c') has a length along a longitudinal axis of the sleeve (1) which is at least twice a radial height of the step wall (3a, 3b, 3a', 3b').

13. Assembly according to any one of the preceding claims, wherein more than 50% of the outer surface of the elongated element (10) is threaded.

14. Assembly according to any one of the preceding claims, wherein more than 50% of the inner surface of the sleeve (1) is threaded.

15. A method for producing an assembly according to any one of claims 1 to 14 by connecting the conductor end (22) of the first cable (20) with the conductor end (22') of the second cable (20') using the conductor joint,
wherein the method comprises the following steps
before connecting the conductors ends (22,22') of the first and second cables (20,20'), removing a longitudinal portion of the circular center wire (24,24') of the conductor end (22,22'), thereby creating a recess surrounded by the layers (26a-26e, 26a'-26e') of stranded wires (29, 29')
i) inserting the conductor end (22) of the first cable (20) into one sleeve opening (4) such that one longitudinal end of the core rod (12) is inserted into the recess of the conductor end (22) of the first cable and one of the two terminal rod walls (13) abuts or is adjacent to the terminal wall (25) of the circular center wire (24) of the first cable (20) and
ii) inserting the conductor end (22') of the second cable (20') into the other sleeve opening (4') such that the other longitudinal end of the core rod (12) is inserted into the recess of the conductor end (22') of the second cable (20') and the other terminal rod wall (13') abuts or is adjacent to the terminal wall (25') of the circular center wire (24') of the second cable (20'),
iii) compressing said sleeve (1) radially towards the elongated element (10), thereby locking the conductor joint to the conductor ends.

16. The method according to claim 15, wherein step iii) involves circularly compressing the sleeve (1) until the diameter of a jointed section is the same to the diameter of the conductor ends (22, 22') of the first and second cable (20, 20').

## Patentansprüche

1. Anordnung, umfassend ein erstes Kabel, ein zweites Kabel und eine Leiterverbindung, die ein Leiterende (22) des ersten Kabels (20) mit einem Leiterende (22') des zweiten Kabels (20') verbindet, wobei die Leiterverbindung Folgendes umfasst:
- eine rohrförmige Längshülse (1) mit einer Hülsenlänge Ls, die an jedem Längsende eine Hülsenöffnung (4, 4') mit einem Innendurchmesser aufweist, der das Einführen der zu verbindenden Leiterenden (22, 22') ermöglicht, und
- ein längliches Element (10), das innerhalb der Hülsenöffnungen (4, 4') angeordnet ist, wobei das längliche Element (10) einen Kernstab (12) mit einer Kernstablänge Lr und einer Anschlussstabwand (13, 13') an jedem Längsende umfasst, wobei das längliche Element (10) ferner Folgendes umfasst:
• ein konzentrisch um den Kernstab (12) angeordnetes Kernrohr (14) mit einer Kernrohrlänge Lt, die kürzer als die Kernstablänge Lr ist und wobei der Durchmesser des Kernrohres (14) größer als der Durchmesser des Kernstabes (12) ist, und
• eine Kernwand (15, 15'), die zwischen dem Kernstab (12) und dem Kernrohr (14) angeordnet ist und entlang einer radialen Ausrichtung des länglichen Elements (10) ausgerichtet ist,
**dadurch gekennzeichnet, dass** die Leiterenden des ersten und des zweiten Kabels Folgendes umfassen:
- einen kreisförmigen Mitteldraht (24, 24'), der eine Anschlusswand (25, 25') umfasst,
- eine Vielzahl von konzentrischen Lagen (26a-26e, 26a'-26e') von Litzendrähten (29, 29'), die den kreisförmigen Mitteldraht (24, 24') umgeben, wobei jede Lage (26a-e, 26a'-26e') von Litzendrähten (29, 29') eine Anschlusswand (27a-e, 27a'-27e') umfasst,
sodass eine Aussparung durch ein Entfernen eines Längsabschnitts des kreisförmigen Mitteldrahts (24, 24') von den Leiterenden und durch die umgebenden Lagen von Litzendrähten (29, 29') erzeugt wird, sodass jedes Längsende des Kernstabs (12) in die Aussparung eingeführt wird.

2. Anordnung nach Anspruch 1, wobei die Kernstablänge Lr länger als die Hülsenlänge Ls ist.

3. Anordnung nach Anspruch 1 oder 2, wobei das längliche Element (10) konzentrisch innerhalb der Hülse (1) angeordnet ist.

4. Anordnung nach einem der vorhergehenden Ansprüche, wobei die Hülse (1) eine Innenfläche umfasst, die als zwei rohrförmige Treppen (2, 2') geformt ist, die um einen radialen Querschnittsbereich in einer Längsmitte der Hülse (1) gespiegelt sind, wobei jede Treppe (2, 2') Folgendes umfasst:
• eine untere Stufenfläche (2a, 2a') an der am nächsten befindlichen Hülsenöffnung (4, 4'), die entlang einer Längsachse (X) der Hülse (1) ausgerichtet ist,
• eine höhere Stufenfläche (2c, 2c') in der Längsmitte und
• eine Stufenwand (3a, 3b, 3a', 3b'), die zwischen der unteren Stufenfläche (2a, 2a') und der höheren Stufenfläche (2c, 2c') angeordnet ist, die entlang einer radialen Querschnittsrichtung der Hülse (1) ausgerichtet ist.

5. Anordnung nach Anspruch 1, wobei der radiale Abstand der Kernwand (15, 15') gleich einer radialen Dicke einer ersten Lage (26a, 26a') eines Litzendrahts (29, 29') ist, der unmittelbar an einen Mitteldraht (24, 24') der zu verbindenden Leiterenden (22, 22') angrenzt.

6. Anordnung nach Anspruch 4, wobei sich die Stufenwand (3a, 3a') an dem Ende der unteren Stufenfläche (2a, 2a') distal zur am nächsten befindlichen Hülsenöffnung (4, 4') befindet und wobei jede Treppe (2, 2') ferner eine Zwischenstufenfläche (2b, 2b') und eine Zwischenstufenwand (3b, 3b') umfasst, die zwischen der Stufenwand (3a, 3a') und der höheren Stufenfläche (2c, 2c') angeordnet ist.

7. Anordnung nach einem der vorhergehenden Ansprüche, wobei die Hülsenlänge Ls gleich oder länger als der Durchmesser mindestens eines der Leiterenden (22, 22') ist.

8. Anordnung nach einem der vorhergehenden Ansprüche, wobei der Durchmesser des Kernstabs (12) gleich oder kleiner als der Durchmesser eines Mitteldrahts (24, 24') jedes der Leiterenden (22, 22') ist.

9. Anordnung nach einem der Ansprüche 4 oder 6, wobei für jede Treppe (2, 2') die Längen jeder Stufenfläche (2a-2c,2a'-2c') entlang einer Längsachse der Hülse (1) gleich sind.

10. Anordnung nach einem der Ansprüche 4, 6 oder 9, wobei der radiale Abstand der ersten Stufenwand (3a, 3a') der Hülse (1) gleich der radialen Dicke einer äußersten Lage (26e, 26e') von Litzendrähten (29, 29') ist.

11. Anordnung nach einem der vorhergehenden Ansprüche, wobei eine Längserstreckung der Anschlussstabwand (13, 13') an mindestens einem Längsende des Kernstabs (12) einen größeren Durchmesser als die verbleibende Längserstreckung des Kernstabs (12) aufweist.

12. Anordnung nach einem der Ansprüche 4, 6, 9 oder 10, wobei für jede Treppe jede Stufenfläche (2a, 2b, 2c, 2a', 2b', 2c') eine Länge entlang einer Längsachse der Hülse (1) aufweist, die mindestens das Doppelte einer radialen Höhe der Stufenwand (3a, 3b, 3a', 3b') beträgt.

13. Anordnung nach einem der vorhergehenden Ansprüche, wobei mehr als 50 % der Außenfläche des länglichen Elements (10) mit einem Gewinde versehen ist.

14. Anordnung nach einem der vorhergehenden Ansprüche, wobei mehr als 50 % der Innenfläche der Hülse (1) mit einem Gewinde versehen ist.

15. Verfahren zum Herstellen einer Anordnung nach einem der Ansprüche 1 bis 14, indem das Leiterende (22) des ersten Kabels (20) mit dem Leiterende (22') des zweiten Kabels (20') unter Verwendung der Leiterverbindung verbunden wird, wobei das Verfahren die folgenden Schritte umfasst:
bevor die Leiterenden (22, 22') des ersten und zweiten Kabels (20, 20') verbunden werden, Entfernen eines Längsabschnitts des kreisförmigen Mitteldrahts (24, 24') des Leiterendes (22, 22'), wodurch eine Aussparung erzeugt wird, die von den Lagen (26a-26e, 26a'-26e') von Litzendrähten (29, 29 ') umgeben ist,
i) Einführen des Leiterendes (22) des ersten Kabels (20) in eine Hülsenöffnung (4) derart, dass ein Längsende des Kernstabs (12) in die Aussparung des Leiterendes (22) des ersten Kabels eingeführt wird und eine der zwei Anschlussstabwände (13) an der Anschlusswand (25) des kreisförmigen Mitteldrahts (24) des ersten Kabels (20) anliegt oder an diese angrenzt, und
ii) Einführen des Leiterendes (22') des zweiten Kabels (20') in die andere Hülsenöffnung (4') derart, dass das andere Längsende des Kernstabs (12) in die Aussparung des Leiterendes (22') des zweiten Kabels (20') eingeführt wird und die andere Anschlussstabwand (13') an der Anschlusswand (25') des kreisförmigen Mitteldrahts (24') des zweiten Kabels (20') anliegt oder an diese angrenzt,
iii) Komprimieren der Hülse (1) radial in Richtung des länglichen Elements (10), wodurch die Leiterverbindung an den Leiterenden verriegelt wird.

16. Verfahren nach Anspruch 15, wobei Schritt iii) das kreisförmige Komprimieren der Hülse (1) involviert, bis der Durchmesser eines verbundenen Abschnitts gleich dem Durchmesser der Leiterenden (22, 22') des ersten und zweiten Kabels (20, 20') ist.

## Revendications

1. Ensemble comprenant un premier câble, un second câble et un joint conducteur connectant une extrémité conductrice (22) du premier câble (20) à une extrémité conductrice (22') du second câble (20'), ledit joint conducteur comprenant
- un manchon longitudinal tubulaire (1) d'une longueur de manchon Ls possédant une ouverture de manchon (4, 4') au niveau de chaque extrémité longitudinale avec un diamètre interne permettant l'insertion des extrémités conductrices (22, 22') à connecter, et
- un élément allongé (10) agencé à l'intérieur des ouvertures de manchon (4, 4'), ledit élément allongé (10) comprenant une tige centrale (12) possédant une longueur de tige centrale Lr et une paroi de tige terminale (13, 13') au niveau de chaque extrémité longitudinale, ledit élément allongé (10) comprenant en outre
• un tube central (14) agencé concentriquement autour de la tige centrale (12) possédant une longueur de tube de noyau Lt plus courte que la longueur de tige centrale Lr et ledit diamètre du tube central (14) étant plus grand que le diamètre de la tige centrale (12), et
• une paroi centrale (15, 15') agencée entre la tige centrale (12) et le tube central (14) orientée selon une orientation radiale de l'élément allongé (10)
**caractérisé en ce que** les extrémités conductrices du premier et du second câble comprennent
- un fil central circulaire (24, 24') comprenant une paroi terminale (25, 25'),
- une pluralité de couches concentriques (26a-26e, 26a'-26e') de fils toronnés (29, 29') entourant le fil central circulaire (24,24'), chaque couche (26a-e, 26a'-26e') de fils toronnés (29,29') comprenant une paroi terminale (27a-e, 27a'-27e'),
de sorte qu'un évidement soit créé par un retrait d'une partie longitudinale du fil central circulaire (24,24') des extrémités conductrices et par les couches environnantes de fils toronnés (29,29'), de sorte que chaque extrémité longitudinale de la tige centrale (12) soit insérée dans ledit évidement.

2. Ensemble selon la revendication 1, ladite longueur de tige centrale Lr étant supérieure à la longueur de manchon Ls.

3. Ensemble selon la revendication 1 ou 2, ledit élément allongé (10) étant agencé concentriquement à l'intérieur du manchon (1).

4. Ensemble selon l'une quelconque des revendications précédentes, ledit manchon (1) comprenant une surface interne en forme de deux escaliers tubulaires (2, 2') symétriques l'un de l'autre par rapport à une section transversale radiale au niveau du centre longitudinal du manchon (1), chaque escalier (2, 2') comprenant,
• une surface de marche inférieure (2a, 2a') au niveau de l'ouverture de manchon la plus proche (4, 4') orientée selon un axe longitudinal (X) du manchon (1),
• une surface de marche supérieure (2c, 2c') au niveau du centre longitudinal et
• une paroi de marche (3a,3b, 3a', 3b') agencée entre la surface de marche inférieure (2a, 2a') et la surface de marche supérieure (2c, 2c') orientée selon une direction transversale radiale du manchon (1).

5. Ensemble selon la revendication 1, ladite distance radiale de la paroi centrale (15, 15') étant égale à une épaisseur radiale d'une première couche (26a, 26a') d'un fil toronné (29, 29') immédiatement adjacent à un fil central (24, 24') des extrémités conductrices (22, 22') à connecter.

6. Ensemble selon la revendication 4, ladite paroi de marche (3a,3a') étant au niveau de l'extrémité de surface de marche inférieure (2a,2a'), distale de l'ouverture de manchon la plus proche (4,4'), et chaque escalier (2, 2') comprenant en outre une surface de marche intermédiaire (2b, 2b') et une paroi de marche intermédiaire (3b,3b') agencée entre la paroi de marche (3a,3a') et la surface de marche supérieure (2c,2c').

7. Ensemble selon l'une quelconque des revendications précédentes, ladite longueur de manchon Ls étant supérieure ou égale au diamètre d'au moins l'une des extrémités conductrices (22, 22').

8. Ensemble selon l'une quelconque des revendications précédentes, ledit diamètre de la tige centrale (12) étant inférieur ou égal au diamètre d'un fil central (24, 24') de chacune des extrémités conductrices (22, 22').

9. Ensemble selon l'une quelconque des revendications 4 ou 6, pour chaque escalier (2, 2'), lesdites longueurs de chaque surface de marche (2a-2c,2a'-2c') le long d'un axe longitudinal du manchon (1) étant égales.

10. Ensemble selon l'une quelconque des revendications 4, 6 ou 9, ladite distance radiale de la première paroi de marche (3a, 3a') du manchon (1) étant égale à l'épaisseur radiale d'une couche la plus externe (26e, 26e') de fils toronnés (29, 29').

11. Ensemble selon l'une quelconque des revendications précédentes, une longueur longitudinale de la paroi de tige terminale (13, 13') au niveau d'au moins une extrémité longitudinale de la tige centrale (12) possédant un diamètre plus grand que la longueur longitudinale restante de la tige centrale (12).

12. Ensemble selon l'une quelconque des revendications 4, 6, 9 ou 10, pour chaque escalier, chaque surface de marche (2a, 2b, 2c, 2a', 2b', 2c') possédant une longueur le long d'un axe longitudinal du manchon (1) qui est au moins deux fois une hauteur radiale de la paroi de marche (3a, 3b, 3a', 3b').

13. Ensemble selon l'une quelconque des revendications précédentes, plus de 50 % de la surface externe de l'élément allongé (10) étant filetée.

14. Ensemble selon l'une quelconque des revendications précédentes, plus de 50 % de la surface interne du manchon (1) étant filetée.

15. Procédé permettant la fabrication d'un ensemble selon l'une quelconque des revendications 1 à 14 en connectant l'extrémité conductrice (22) du premier câble (20) avec l'extrémité conductrice (22') du second câble (20') à l'aide du joint conducteur, ledit procédé comprenant les étapes suivantes avant de connecter les extrémités conductrices (22,22') des premier et second câbles (20,20'), le retrait d'une partie longitudinale du fil central circulaire (24,24') de l'extrémité conductrice (22,22'), créant ainsi un évidement entouré par les couches (26a-26e, 26a'-26e') de fils toronnés (29, 29')
i) l'insertion de l'extrémité conductrice (22) du premier câble (20) dans une ouverture de manchon (4) de sorte qu'une extrémité longitudinale de la tige centrale (12) soit insérée dans l'évidement de l'extrémité conductrice (22) du premier câble et que l'une des deux parois de tige terminale (13) vienne en butée contre la paroi terminale (25) du fil central circulaire (24) du premier câble (20) ou soit adjacente à celle-ci et
ii) l'insertion de l'extrémité conductrice (22') du second câble (20') dans l'autre ouverture de manchon (4') de sorte que l'autre extrémité longitudinale de la tige centrale (12) soit insérée dans l'évidement de l'extrémité conductrice (22') du second câble (20') et que l'autre paroi de tige terminale (13') vienne en butée contre la paroi terminale (25') du fil central circulaire (24') du second câble (20') ou soit adjacente à celle-ci,
iii) la compression dudit manchon (1) radialement vers l'élément allongé (10), verrouillant ainsi le joint conducteur aux extrémités conductrices.

16. Procédé selon la revendication 15, ladite étape iii) impliquant la compression circulaire du manchon (1) jusqu'à ce que le diamètre d'une section jointe soit le même que le diamètre des extrémités conductrices (22, 22') des premier et second câbles (20, 20').
